Europäisches Patentamt

(19) European Patent Office

Office européen des brevets

(11) Publication number : **0 170 432 B2**

(12) NEW EUROPEAN PATENT SPECIFICATION

(45) Date of publication of the new patent
specification : **06.11.91 Bulletin 91/45**

(21) Application number : **85304768.6**

(22) Date of filing : **04.07.85**

(51) Int. Cl.⁵ : **B60R 22/36**

(54) Vehicle seat belt retractor.

(30) Priority : **05.07.84 GB 8417149**

(43) Date of publication of application :
**05.02.86 Bulletin 86/06**

(45) Publication of the grant of the patent :
**30.11.88 Bulletin 88/48**

(45) Mention of the opposition decision :
**06.11.91 Bulletin 91/45**

(84) Designated Contracting States :
**AT BE CH DE FR GB IT LI LU NL SE**

(56) References cited :
EP-A- 0 092 407
DE-A- 1 456 115
DE-A- 2 924 575

(56) References cited :
DE-A- 3 212 992
DE-C- 2 163 732
US-A- 3 397 842
US-A- 3 568 948
US-A- 3 905 562
US-A- 4 190 213

(73) Proprietor : **ASE (UK) LIMITED**
**Norfolk Street**
**Carlisle Cumbria CA2 5HX (GB)**

(72) Inventor : **Kent, Malcolm Everest Pelham**
**2 Salmon Hall Seaton**
**Workington Cumbria (GB)**

(74) Representative : **Ackroyd, Robert et al**
**W.P. THOMPSON & CO. Eastcheap House**
**Central Approach**
**Letchworth, Hertfordshire SG6 3DS (GB)**

EP 0 170 432 B2

## Description

This invention relates to seat belt retractors, for example retractors used in motor vehicles.

Such retractors commonly comprise belt storage means, from which a belt can be with drawn for use against a pull imposed by a retractor spring means, and an emergency locking mechanism which will lock the retractor against belt withdrawal in response to at least one of a predetermined belt acceleration in the withdrawal direction and predetermined acceleration, which term is employed here to comprehend also deceleration, of the retractor. Many known retractors contain a large number of small parts which must operate with great reliability. This tends to make manufacture and assembly time-consuming and expensive processes. The number of parts in the locking mechanism of the retractor also affects the reliability of the retractor and its response time to incidence of the predetermined acceleration. It is therefore important from the points of view both of ease and cheapness of manufacture and of safety for the number of locking mechanism parts to be kept to a minimum. It is also important that the predetermined acceleration should be determined reliably in manufacture and be maintained at or close to its original value throughout use of the retractor, usually over a period of at least several years.

US Patent 3905562 describes a vehicle seat belt retractor in which a locking pawl is rotatably mounted on the spool member of the retractor and pivots outwardly to produce retractor locking a belt acceleration above a locking threshold. The outward pivotal movement of the locking pawl is produced when relative movement takes place, against a biassing spring, between the pawl and an inertia member in the form of a flywheel which is freely journalled on the spool and concentric there with. This retractor has the disadvantage that the belt-sensitive mechanism is gravity-sensitive and will thus operate only in a single predetermined orientation which must be decided upon before manufacture. Any particular retractor including the mechanism is accordingly restricted as to its range of applications.

A vehicle seat belt retractor of the present invention has a rotatable belt storage spool and a belt-sensitive locking mechanism operable to effect locking of the spool against rotation in the belt-unwinding direction, the locking mechanism comprising an inertia member which is rotatably mounted on a member rotatably driven by or forming part of the spool, and a resilient drive connection between the inertia member and the rotatable member on which it is mounted, the axis of rotation of the inertia member being offset from the axis of rotation of the rotatable member and extending through or close to the centre of mass of the inertia member, the resilient drive connection, upon acceleration below a threshold value of the spool member in the belt-unwinding direction, driving the inertia member to rotate so as to maintain a fixed position relative to the rotatable member, and, upon acceleration of the spool member at or above the threshold value, deforming resiliently to allow rotation of the inertia member relative to the rotatable member to take place and thereby effect locking of the retractor. The foregoing features are common to the retractor described in DE-A-2924575. The retractor of the present invention is characterised in that the resilient drive connection comprises an elongate resilient element extending between respective attachment points on the rotatable member and the inertia member upon relative movemenet of the members, undergoing a buckling deformation.

With such a retractor, which operates independently of its orientation, the resistance of the drive connection to deformation determines the threshold value of spool acceleration at which retractor locking occurs. At accelerations less than the threshold value, the resilient drive connection urges the inertia member into a stationary position relative to the rotatable member and the movement, relative to an external frame of reference, of the inertia member upon rotation of the spool is a combination of the rotational motion of the inertia member about its own axis and the revolutional motion of that axis about the axis of rotation of the rotatable member. The rotational and inertia members thus experience the same angular acceleration.

When the spool is subjected to an acceleration at or above the threshold value, the inertia member cannot accelerate angularly at the same rate as the rotational member, the resilient connection deforms and the inertia member rotates relative to the rotatable member against the resilient bias of the drive connection. Engagement of the inertia member with the operating member then takes place and retractor locking ensues.

The ends of the elongate resilient element are preferably attached to the two members in such a way that, during deformation, the ends do not undergo translational movement relative to two members. It is however more preferable to allow the end portions of the buckling element to pivot relative to the two members and, to allow this, the ends may be located in respective V-shaped notches which allow pivotal movement of the end portions between the inner surfaces of their two limbs. In other arrangements, the ends of the spring each have an eye which receives a pin on one of the two members, the eyes being formed, for example, by curled portions at the ends of the buckling element.

The degree of deformation per unit load of such a resilient element is relatively insensitive to any curvature of the element in the first relative position of the parts. The element also deforms virtually constantly with load over a wide range of loads. These characteristics make the element particularly well-suited to use as the resilient drive connection of the retractor of the present invention.

The resilient element is conveniently constituted by a strip or wire of resilient material, for example steel, and such an element is particularly economical to manufacture and can be made readily within close tolerances because manufacture involves no forming step. The strip may have a rectilinear or a curvilinear configuration in the first position of the retractor parts.

The locking mechanism conveniently includes an operating member which is rotatable coaxially with the rotatable member and is preferably a cup-shaped member which has a cylindrical wall within which the inertia member is received.

An embodiment of the invention will now be described by way of example with reference to the drawings, in which:

Figure 1 is an exploded perspective view of a vehicle seat belt retractor embodying the invention, Figure 2 is an end view of a spool member of the retractor shown in Figure 1, and
Figures 3 and 4 are views similar to Figure 2 showing, somewhat schematically, the inertia members of two modified forms of the retractor of Figures 1 and 2.

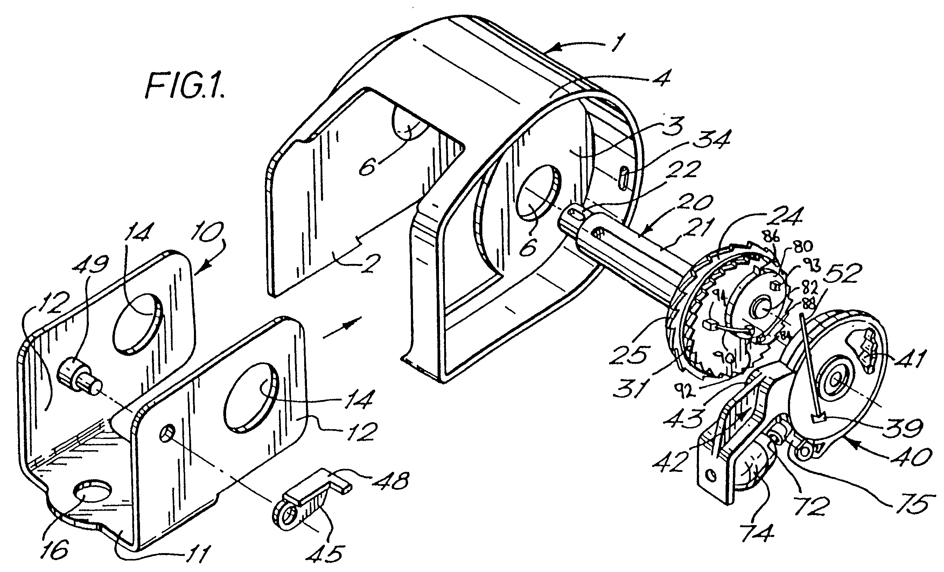

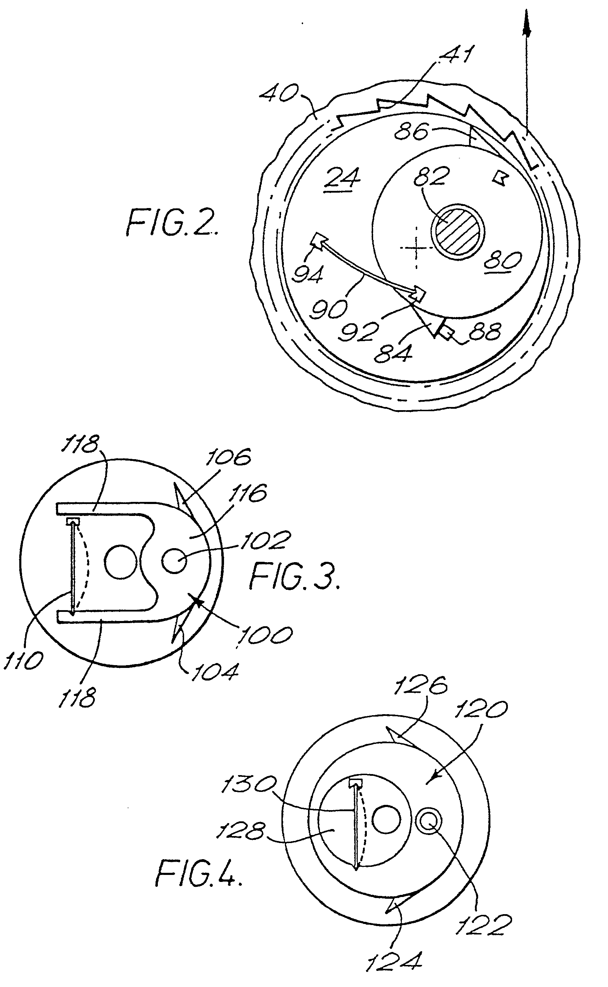

The retractor shown in Figures 1 and 2 of the drawings has a housing comprising a cover member 1 which is moulded in a suitable plastics material. The cover member 1 has a curved outer wall portion 4 and side wall portions 2, 3 spaced inwardly from the adjacent side edges of the cover member. Each side wall portion 2 or 3 has a circular aperture 6, the two apertures being aligned with each other. The sides of the housing are closed by closure members (not shown) which can be positioned to extend parallel to, and spaced outwardly from, the side wall portions 2, 3.

A rigid metal frame 10 comprises a centre web 11 connecting two side webs 12, shaped to match the shape of the cover member side wall portions 2, 3 and having aligned apertures 14. The cover member 1 is assembled with the frame 10 by reception of the frame side webs 12 between the side wall portions of the cover, the apertures 6 of the cover being aligned with the apertures 14 of the frame. The centre web 11 of the frame 10 has an aperture 16 for receiving an anchorage bolt (not shown), by means of which the retractor is mounted in a vehicle.

The cover member 1 and the frame 10 journal a spool 20. The spool 20 is integrally formed, as by die-casting, and has an axially slotted spindle portion 21 having at one end an axially slotted stub shaft 22 of smaller diameter, and at the other end a ratchet wheel portion 24 with two sets of ratchet teeth, a first set of teeth 25 being arranged around a larger diameter circle than a second set of teeth 31.

The spool 20 is assembled into the already-assembled frame and cover by being axially moved through aligned apertures 6, 14 until the ratchet wheel portion is adjacent the side wall portion 3. The spool 20 is held in the assembled position by a circlip (not shown) which engages a groove (also not shown) in the spindle portion 21 on the inner side of the side web 12 adjacent the ratchet wheel portion 24.

The housing side wall portion 2 and the adjacent closure plate receive between them a spiral retractor spring (not shown), the inner end of which is received in the slot in the stub shaft 22 and the outer end of which is provided with a cut-out portion by which it is held by a co-operating formation of the side wall portion 2. Both closure plates are assembled with the cover member 1 by means of projecting tongues on the plates received in slots 34 in the curved wall portion 4, assembly being effected by virtue of the resilience of the housing parts. The closure plate adjacent the spring is secured in the assembled condition by a screw extending through it into a tapped recess in the side wall portion 2. The belt can be assembled with the spool 20 by being pushed through a guide slot (not shown) in the cover member into the axial slot in the spindle portion 21 where it is retained by a webbing pin (not shown).

The space between the cover side wall portion 3 and the adjacent closure plate receives vehicle and belt acceleration inertial sensing mechanisms, and a locking mechanism responsive to them to lock the spool 20 against rotation relative to the frame 10 in the belt unwinding direction.

The locking mechanism includes the ratchet wheel portion 24 and an operating member in the form of a lockcup 40 with internal ratchet teeth 41, the lockcup being pivotally-mounted on a suitable part (not shown) of the retractor housing. The lockcup 40 is mounted for free rotation about the axis of the spool member 20 and is axially displaced from the ratchet teeth set 31. The lockcup 40 has a cam surface 43 on a laterally extending arm 42. The cam surface 43 is in contact with a follower surface of a lockbar 45 which is pivotally-mounted by means of a pivot pin 49 through an aperture in one side web 12 of the frame 10.

The lockcup 40 is biassed by a buckling spring element 52 into a position in which a tooth portion 48 of the lockbar 45 is spaced from the ratchet teeth 25. One end of the buckling spring 52 is located in a V-shaped notch 39 on the lockcup 40. The other end is located in a similar notch (not shown) at a convenient point on the frame 10. The spring 52 is formed from a length of steel wire of circular cross-section but could otherwise be a rectangular-section strip and, upon relative movement between the lockcup 40 and the frame 10, under goes a buckling deformation. During this deformation, the ends of the spring do not undergo translational movement relative to the lockcup 40 and the frame 10 but pivot relative thereto.

The lockcup 40 is integrally formed with its laterally extending arm 42, which supports a retractor acceleration sensitive device including a hollow inertial weight 74 and an upstanding pin 72. The acceleration sensitive device also includes a lever 75 which is pivotally-mounted on the arm 42 and rests on the pin 72. The lever 75 has a toothed end (not shown) which can engage the ratchet teeth 31.

The lockcup 40 houses a belt acceleration responsive inertial sensing device. This belt-sensitive device is shown in more detail in Figure 2 and comprises a generally-circular inertia disc 80 which is rotatably-mounted on a spigot 82 on the circular end face of the spool member 20. The inertia disc 80 has a circular shape except for a pair of diametrically-opposed pawl portions 84, 86 which protrude outside the circumference of the circle which defines the outer periphery of the remainder of the disc 80. One pawl portion 86 is positioned adjacent the internal teeth 41 on the lockcup 40 and, by rotation of the disc 80 on its spigot 82 in the direction which is clockwise in Figure 2, can be made to protrude to engage the internal teeth 41 of the lockcup 40. The outer pawl portion 84 is shaped identically to the pawl portion 86 to ensure that the centre of mass of the disc 80 is at its geometric centre. The pawl portion 84 abuts a stop 88 on the ratchet wheel end face, against which it is urged by a buckling spring 90. The ends of the spring 90 are anchored at anchorages 92, 94 to the ratchet wheel portion 24 and the inertia disc 80 respectively and rotation of the disc 80 in the direction which is clockwise in Figure 2 is resisted by buckling of the spring. A further unused anchorage 93 balances the disc 80.

Operation of the seat belt retractor is as follows. Belt-sensitive locking of the retractor will be described first. In normal operation the spool 20 is subjected to angular acceleration below a threshold value and, in these circumstances, the inertia disc 80 is driven by the spring 90 which resists buckling and so ensures that the disc 80 rotates about its axis of rotation relative to the retractor frame 10 whilst its centre also undergoes motion in a circle about the axis of the spool member 20. During this motion of the inertia disc 80, the pawl portion 86 remains out of contact with the ratchet teeth 31 on the lockcup 40. No engagement between the spool member and the lockcup 40 therefore occurs and the spool member can rotate freely in the belt-unwinding direction.

When the spool member 20 is subjected to an angular acceleration at or above the threshold value in the belt-unwinding direction, the spring 90 undergoes a buckling deformation and the inertia disc 80 rotates clockwise (as shown in Figure 2) on its spigot 82. As a consequence, the pawl portion 86 moves to engage the internal ratchet teeth on the lockcup 40 and the lockcup then rotates with the spool in the belt-unwinding direction (anti-clockwise in Figure 2). This rotation of the lockcup 40 causes the lockbar 45 to pivot on the frame side wall 12 and its pawl portion 48 to engage the ratchet teeth 25 and lock the spool against rotation in the belt-unwinding direction.

Locking of the retractor in response to acceleration of the vehicle in which the retractor is mounted takes place as follows. Upon such acceleration by an amount greater than a threshold value, the inertial weight 74 is deflected sufficiently to move the pin 72. This movement is transmitted to the lever 75 and the pawl portion of the lever engages the ratchet teeth 31 on the ratchet wheel 24 portion of the spool member 20. The lockcup 40 is now coupled to the spool member 20 and rotates therewith in the belt unwinding direction by virtue of the unwinding pull on the belt which the acceleration will have caused the user of the belt to exert on the belt. This rotation of the lockcup, because of the contact between the cam surface 43 and the lockbar 45, pivots the lockbar 45 on the frame side wall 12 and the tooth portion 48 of the lockbar 45 engages the ratchet teeth 25 to lock the retractor.

Figures 3 and 4 of the drawings show the inertia members of two modified versions of the retractor of Figures 1 and 2.

In Figure 3, the inertia member 100 is pivotally-mounted at 102 and has pawl portions 104, 106. The inertia member 100 has a main portion 116 and two arm portions 118 which extend parallel to each other away from the main portion 116 to define an aperture between them in which a buckling spring 110 is positioned. The spring 110 is fixed at one of its ends on one of the arm portions 118 and at its other end on the end face of the retractor spool.

In Figure 4, the inertia member 120 is pivotally-mounted at 122 and has pawl portions 124, 126. The inertia member 120 is circular except for the pawl portions and has a circular aperture 128 in which a buckling spring 130 is positioned, the spring 130 being fixed at its ends to the inertia member and the spool end face.

The modified embodiments of Figures 3 and 4 operate exactly as described for the embodiment of Figures 1 and 2. It will be evident that the construction of both Figure 3 and Figure 4 are particularly compact because their springs 110, 130 are positioned within the thickness of their inertia members 100, 120. In both cases, the inertia members are mounted for rotation about their centres of mass. It should also be noted that, in both cases, the aperture in the inertia member coincides with the axis of the spool member 20 and the lockcup can therefore be directly rotationally mounted on the circular end face of the spool member 20. It should also be noted that the pawl portions 104, 124 cause the mass of the inertia members 100, 120 to be distributed substantially symmetrically about a plane passing through the pivots 102, 122.

In all the embodiments described, the ends of buckling spring elements 52, 90, 110, 130 are located in V-shaped notches which allow pivotal movement of the spring end portions during buckling deformation. As a modification, the spring ends may be curled to form eyes which receive respective pins formed, for example, on the inertia members 80, 100, 120 and the spool member end faces.

The belt-sensitive locking mechanism described with reference to Figures 1 and 2, and the modified versions also described above, may be used in retractors other than the one shown, for example the retractors described in the applicant's UK Patent Application 8503895 of 15th February 1985.

## Claims

1. A vehicle seat belt retractor having a rotatable belt storage spool (20) and a belt-sensitive locking mechanism operable to effect locking of the spool against rotation in the belt-unwinding direction, the locking mechanism comprising an inertia member (80; 100; 120), which is rotatably mounted on a member (24) rotatably driven by or forming part of the spool, and a resilient drive connection (90; 110; 130) between the inertia member and the rotatable member on which it is mounted, the axis of rotation of the inertia member (80; 100; 120) being offset from the axis of rotation of the rotatable member and extending through or close to the centre of mass of the inertia member, the resilient drive connection, upon acceleration below a threshold value of the spool member in the belt-unwinding direction, driving the inertia member to rotate so as to maintain a fixed position relative to the rotatable member, and, upon acceleration of the spool member at or above the threshold value, deforming resiliently to allow rotation of the inertia member relative to the rotatable member to take place and thereby effect locking of the retractor, characterised in that the resilient drive connection comprises an elongate resilient element (90; 110; 130) extending between respective attachment points (94, 92) on the rotatable member (24) and the inertia member (80; 100; 120) and, upon relative movement of the members, undergoing a buckling deformation.

2. A vehicle seat belt retractor according to claim 1, in which the ends of the resilient element (90; 110; 130) are attached to the two members (24, 80; 100; 120) in such a way that, during deformation, the ends of the element do not undergo translational movement relative to the two members.

3. A vehicle seat belt retractor according to claim 2, in which the end portions of the resilient element (90; 110; 130) are free to pivot relative to the two members (24, 80; 100; 120).

4. A vehicle seat belt retractor according to claim 3, in which the ends of the resilient element (90; 110; 130) are located in respective V-shaped notches which allow pivotal movement of the end portions between the inner surfaces of their two limbs.

5. A vehicle seat belt retractor according to claim 3, in which the ends of the resilient element each have an eye which receives a pin on one of the two members, the eyes being formed, for example, by curled portions at the ends of the buckling element.

6. A vehicle seat belt retractor according to any of claims 1 to 5, in which the resilient element (90; 110; 130) is constituted by a strip or wire of resilient material.

7. A vehicle seat belt retractor according to any preceding claim, in which the locking mechanism comprises an operating member (40) which is rotatable coaxially with the spool (20) and is engaged by the inertia member (80; 100; 120) upon the said relative movement of the inertia member, thereby to couple the operating member (40) to rotate with the spool (20) and effect locking of the retractor.

8. A vehicle seat belt retractor according to claim 7, in which the operating member (40) is a cup-shaped member which has a cylindrical wall within which the inertia member (80; 100; 120) is received.

9. A vehicle seat belt retractor according to claim 7 or 8, in which, for engagement with the operating member (40), the inertia member (80; 100; 120) has a protruding portion which is shaped as a pawl (86; 106; 126) and engages ratchet teeth (41) on the operating member to couple the operating member to rotate with the rotatable member and lock the retractor.

10. A vehicle seat belt retractor according to any preceding claim, in which the inertia member (80; 100; 120) is a thin, generally-planar member such as a disc-shaped member.

11. A vehicle seat belt retractor according to claim 10, in which the inertia member is a substantially circular disc (80; 120).

12. A vehicle seat belt retractor according to any preceding claim, in which the inertia member (100; 120) has an aperture (128) in which the resilient drive connection (110; 130) is positioned.

13. A vehicle seat belt retractor according to claim 12, in which the aperture is open at the periphery of the inertia member and lies between a pair of arm portions (118) of the inertia member extending away from a portion (116) whereby the inertia member (120) is mounted on the rotatable member, the drive connection (110) being made between the rotatable member and one of the arm portions.

14. A vehicle seat belt retractor according to claim 12 or 13, in which the axis of rotation of the rotatable member lies within the aperture (128) of the inertia member.

15. A vehicle seat belt retractor according to an preceding claim, in which the rotatable member is rotatable coaxially with the spool.

16. A vehicle seat belt retractor according to any preceding claim, in which the locking mechanism includes a pawl (45) which moves in response to inertia member (80; 100; 120) rotation to engage the teeth (25) of a ratchet wheel (24) rotatable with the spool (20) and thereby lock the retractor.

## Patentansprüche

1. Gurtrückholer für einen Fahrzeugsitz mit einer drehbaren Gurtvorratsspule (20) und einem auf den Gurt ansprechenden Verriegelungsmechanismus, der betätigbar ist, um eine Verriegelung der Spule gegen eine Drehung in Gurtabwickelrichtung zu bewirken, welcher Verriegelungsmechanismus ein Trägheitselement (80;100;120), das auf einem Element (24) drehbar gehalten ist, das von der Spule drehend angetrieben ist oder einen Teil der Spule bildet, und eine federnde Antriebsverbindung (90;110;130) zwischen dem Trägheitselement und dem drehbaren Element umfasst, auf dem es gehalten ist, wobei die Drehachse des Trägheitselementes (80;100;120) gegenüber der Drehachse des drehbaren Elementes versetzt ist und sich durch oder nahe den Schwerpunkt des Trägheitselementes erstreckt, wobei die federnde Antriebsverbindung bei einer Beschleunigung des Spulenelementes in Gurtabwickelrichtung unterhalb eines Schwellenwertes das Trägheitselement zu einer Drehung veranlasst, dergestalt dass eine feste Position relativ zum drehbaren Element beibehalten wird, und bei einer Beschleunigung des Spulenelementes beim oder oberhalb des Schwellenwertes sich federnd verformt, so dass eine Drehung des Trägheitselementes relativ zum drehbaren Element stattfinden kann und dadurch eine Verriegelung des Rückholers bewirkt wird, dadurch gekennzeichnet, dass die federnde Antriebsverbindung ein längliches federndes Element (90;110;130) umfasst, das sich zwischen betreffenden Anbindungspunkten (94,92) am drehbaren Element (24) und dem Trägheitselement (80;100;120) erstreckt und bei einer Relativbewegung der Elemente eine ausknickende Verformung erfährt.

2. Gurtrückholer für einen Fahrzeugsitz nach Anspruch 1, bei dem die Enden des federnden Elementes (90;110;130) an den beiden Elementen (24,80;100;120) dergestalt befestigt sind, dass die Enden des Elementes während der Verformung keine translatorische Bewegung relativ zu den beiden Elementen vornehmen.

3. Gurtrückholer für einen Fahrzeugsitz nach Anspruch 1, bei dem die Endbereiche des federnden Elementes (90;110;130) frei zur Schwenkung relativ zu den beiden Elementen (24,80;100;120) sind.

4. Gurtrückholer für einen Fahrzeugsitz nach Anspruch 3, bei dem die Enden des federnden Elementes ( 90;110;130) in betreffenden V-förmigen Einkerbungen angeordnet sind, die eine Schwenkbewegung der Endbereiche zwischen den inneren Oberflächen der beiden Schenkel erlauben.

5. Gurtrückholer für einen Fahrzeugsitz nach Anspruch 3, bei dem die Enden des federnden Elementes jeweils eine Öse haben, die einen Stift an einem der beiden Elemente aufnimmt, wobei die Ösen z.B. durch umgebördelte Bereiche der Enden des Ausknickelementes gebildet sind.

6. Gurtrückholer für einen Fahrzeugsitz nach einem der Ansprüche 1 bis 5, bei dem das federnde Element (90;110;130) durch einen Streifen oder Draht aus federndem Material gebildet ist.

7. Gurtrückholer für einen Fahrzeugsitz nach einem der vorhergehenden Ansprüche, bei dem der Verriegelungsmechanismus ein Betätigungselement (40) umfasst, das koaxial mit der Spule (20) drehbar ist und vom Trägheitselement (80;100;120) bei dessen Relativdrehung erfasst wird, so dass das Betätigungselement (40) mitgenommen wird, um sich mit der Spule (20) zu drehen und eine Verriegelung des Rückholers zu bewirken.

8. Gurtrückholer für einen Fahrzeugsitz nach Anspruch 7, bei dem das Betätigungselement (40) ein napfförmiges Element ist, das eine zylindrische Wand hat, in der das Trägheitselement (80; 100; 120) aufgenommen ist.

9. Gurtrückholer für einen Fahrzeugsitz nach Anspruch 7 oder 8, bei dem zur Eingriffnahme mit dem Betätigungselement (40) das Trägheitselement (80;100;120) einen vorstehenden Bereich hat, der als Klinke (86;106;126) ausgebildet ist und in Eingriff mit Rastzähnen (41) am Betätigungselement steht, um das Betätigungselement mitzunehmen, so dass es sich mit dem drehbaren Element dreht und den Rückholer verriegelt.

10. Gurtrückholer für einen Fahrzeugsitz nach einem der vorhergehenden Ansprüche, bei dem das Trägheitselement (80;100;120) ein dünnes, im wesentlichen ebenes Element, beispielsweise ein scheibenförmiges Element, ist.

11. Gurtrückholer für einen Fahrzeugsitz nach Anspruch 10, bei dem das Trägheitselement eine im wesentlichen kreisförmige Scheibe (80;120) ist.

12. Gurtrückholer für einen Fahrzeugsitz nach einem der vorhergehenden Ansprüche, bei dem das Trägheitselement (100,120) eine öffnung (128) hat, in der die federnde Antriebsverbindung (110,130) angeordnet ist.

13. Gurtrückholer für einen Fahrzeugsitz nach Anspruch 12, bei dem die Öffnung am Umfang des Trägheitselementes offen ist und zwischen einem Paar Armereiche (118) des Trägheitselementes liegt, die sich von einem Bereich (116) weg erstrecken, so dass das Trägheitselement (120) am drehbaren Element gehalten ist, wobei die Antriebsverbindung (110) zwischen dem drehbaren Element und einem der Armbereiche ausgebildet ist.

14. Gurtrückholer für einen Fahrzeugsitz nach Anspruch 12 oder 13, bei dem die Drehachse das drehbare Elemente in der Öffnung (128) des Trägheitselementes liegt.

15. Gurtrückholer für einen Fahrzeugsitz nach einem der vorhergehenden Ansprüche, bei dem dis drehbare Element koaxial mit der Spule drehbar ist.

16. Gurtrückholer für einen Fahrzeugsitz nach einem der vorhergehenden Ansprüche, bei dem der Verriegelungsmechanismus eine Klinke (45) aufweist, die sich entsprechend der Drehung des Trägheitselementes (80;100;120) bewegt, um in Eingriff mit den Zähnen (25) eines Klinkensperrades (24) zu treten, das mit der Spule (20) drehbar ist, und dadurch den Rückholer zu verriegeln.

## Revendications

1. Enrouleur pour ceinture de siège de véhicule comprenant une bobine rotative (20) de stockage de ceinture et un mécanisme de blocage sensible à la ceinture, qui agit pour effectuer un blocage de la bobine contre une rotation dans le sens de déroulement de la ceinture, le mécanisme de blocage comprenant une pièce d'inertie (80;100;120), qui est montée de façon tournante sur une pièce (24) entraînée en rotation par la bobine ou faisant partie de celle-ci, et une liaison d'entraînement élastique (90;110;130) entre la pièce d'inertie et la pièce tournante sur laquelle elle est montée, l'axe de rotation de la pièce d'inertie (80;100;120) étant décalé de l'axe de rotation de la pièce tournante et passant par le centre ou près du centre de gravité de la pièce d'inertie, la liaison d'entraînement élastique, lors d'une accélération inférieure à une valeur de seuil de la bobine dans le sens de déroulement de la ceinture, entraînant la pièce d'inertie en rotation de manière à maintenir une position fixe par rapport à la pièce tournante, et, lors d'une accélération de la bobine égale ou supérieure à la valeur de seuil, se déformant élastiquement pour permettre une rotation de la pièce d'inertie par rapport à la pièce tournante, ce qui effectue un blocage de l'enrouleur, caractérisé en ce que la liaison d'entraînement élastique comprend un élément élastique allongé (90;110;130) s'étendant entre des points de fixation respectifs (94,92) sur la pièce tournante (24) et la pièce d'inertie (80;100;120) et subissant une déformation par flambage lors d'un mouvement relatif des pièces.

2. Enrouleur pour ceinture de siège de véhicule suivant la revendication 1, dans lequel les extrémités de l'élément élastique (90;110;130) sont fixées aux deux pièces (24,80;100;120) d'une manière telle que, pendant la déformation, les extrémités de l'élément n'effectuent pas de mouvement de translation par rapport aux deux pièces.

3. Enrouleur pour ceinture de siège de véhicule suivant la revendication 2, dans lequel les parties d'extrémité de l'élément élastique (90;110;130) sont libres de pivoter par rapport aux deux pièces (24,80;100;120).

4. Enrouleur pour ceinture de siège de véhicule suivant la revendication 3, dans lequel les extrémités de l'élément élastique (90;110;130) sont placées dans des encoches respectives en forme de V qui permettent un mouvement pivotant des parties d'extrémité entre les surfaces intérieures de leurs deux branches.

5. Enrouleur pour ceinture de siège de véhicule suivant la revendication 3, dans lequel les extrémités de l'élément élastique comportent chacune un oeillet qui reçoit une tige prévue sur l'une des deux pièces, les oeillets étant formés, par exemple, par des parties bouclées aux extrémités de l'élément de flambage.

6. Enrouleur pour ceinture de siège de véhicule suivant l'une quelconque des revendications 1 à 5, dans lequel l'élément élastique (90;110;130) est constitué par une bande ou un fil de matière élastique.

7. Enrouleur pour ceinture de siège de véhicule suivant l'une quelconque des revendications précédentes, dans lequel le mécanisme de blocage comprend une pièce de manoeuvre (40) qui peut tourner coaxialement avec la bobine (20) et est attaquée par la pièce d'inertie (80;100;120) lors dudit mouvement relatif de la pièce d'inertie, de manière à accoupler la pièce de manoeuvre (40) en rotation avec la bobine (20) et à effectuer le blocage de l'enrouleur.

8. Enrouleur pour ceinture de siège de véhicule suivant la revendication 7, dans lequel la pièce de manoeuvre (40) est une pièce en forme de coupelle qui comporte une paroi cylindrique à l'intérieur de laquelle est logée la pièce d'inertie (80;100;120).

9. Enrouleur pour ceinture de siège de véhicule suivant la revendication 7 ou 8, dans lequel, pour l'engagement avec la pièce de manoeuvre (40), la pièce d'inertie (80;100;120) comporte une partie saillante qui est en forme de cliquet (86;106;126) et qui vient en prise avec une denture à rochet (41) sur la pièce de manoeuvre , afin d'accoupler la pièce de manoeuvre en rotation avec la pièce tournante et de bloquer l'enrouleur.

10. Enrouleur pour ceinture de siège de véhicule suivant l'une quelconque des revendications précédentes, dans lequel la pièce d'inertie (80;100;120) est une pièce mince sensiblement plane, telle qu'une pièce en forme de disque.

11. Enrouleur pour ceinture de siège de véhicule suivant la revendication 10, dans lequel la pièce d'inertie est un disque sensiblement circulaire (80;120).

12. Enrouleur pour ceinture de siège de véhicule suivant l'une quelconque des revendications précédentes, dans lequel la pièce d'inertie (100;120) comporte une ouverture (128) dans laquelle la liaison d'entraînement élastique (110;130) est placée.

13. Enrouleur pour ceinture de siège de véhicule suivant la revendication 12, dans lequel l'ouverture débouche à la périphérie de la pièce d'inertie et se trouve entre deux bras (118) de la pièce d'inertie qui s'étendent à la l'opposé d'une partie (116) par laquelle la pièce d'inertie (120) est montée sur la pièce tournante, la liaison d'entraînement (110) agissant entre la pièce tournante et l'un des bras.

14. Enrouleur pour ceinture de siège de véhicule suivant la revendication 12 ou 13, dans lequel l'axe de rotation de la pièce tournante est situé à l'intérieur de l'ouverture (128) de la pièce d'inertie.

15. Enrouleur pour ceinture de siège de véhicule suivant l'une quelconque des revendications précédentes, dans lequel la pièce tournante peut tourner coaxialement avec la bobine.

16. Enrouleur pour ceinture de siège de véhicule suivant l'une quelconque des revendications précédentes, dans lequel le mécanisme de blocage comprend un cliquet (45) qui se déplace en réponse à la rotation de la pièce d'inertie (80;100.120) de manière à attaquer les dents (25) d'une roue à rochet (24) tournant avec la bobine (20) et à bloquer ainsi l'enrouleur.

FIG.1.

EP 0 170 432 B2

FIG.2.

FIG.3.

FIG.4.